# EUROPÄISCHE PATENTANMELDUNG

(11) **EP 1 284 242 A2**
(43) Veröffentlichungstag der Anmeldung: **19.02.2003**
(21) Anmeldenummer: 02016170.9
(22) Anmeldetag: 20.07.2002
(51) Int. Cl.: C03B 11/08, C03B 40/04

(54) **Vorrichtung zum Pressformen von schmelzflüssigen Körpern, insbesondere aus Glas oder Glaskeramik**

(30) Priorität: 14.08.2001 DE 10139869
(71) Anmelder: Schott Glas, 55122 Mainz (DE); Carl Zeiss Stiftung Trading as Schott Glaswerke, 55122 Mainz (DE)
(72) Erfinder: Kunert, Christian, 55122 Mainz (DE); Langsdorf, Andreas, Dr., 55218 Ingelheim (DE); Greulich-Hickmann, Norbert, Dr., 55127 Mainz (DE)
(74) Vertreter: Dr. Weitzel & Partner

(57) **Zusammenfassung**

Die Erfindung betrifft eine Vorrichtung zum Preßformen eines schmelzflüssigen Postens aus schmelzfähigem Material, insbesondere aus Glas oder Glaskeramik, zu einem Körper bestimmter Gestalt;
- mit Preßwerkzeugen, die ein Formnest zum Aufnehmen des Postens miteinander bilden;
- die Preßwerkzeuge bestehen wenigstens im Bereich der formgebenden Fläche aus offenporigem Material;
- die Preßwerkzeuge sind an eine Druckgasquelle angeschlossen, um einen Gasstrom zu erzeugen, der an den formgebenden Flächen austritt.

Gemäß der Erfindung sind im offenporigem Material der formgebenden Flächen die den formgebenden Flächen nahen Poren kleiner, als die den formgebenden Flächen fernen Poren.

## Beschreibung

Die Erfindung betrifft eine Vorrichtung, mit welcher Posten aus schmelzflüssigen Stoffen geformt werden können. Bei solchen Stoffen handelt es sich vorwiegend um Glas oder um Glaskeramik. Als Formgebungsverfahren wird Pressen angewandt.

Das Pressen von Glas ist eine seit langem bekannte Formgebungsvariante. Dabei wird ein auf eine geeignete Temperatur gebrachtes Stück Glas, das bei dieser Temperatur eine für die Verformung ausreichend niedrige Viskosität aufweist, üblicherweise zwischen mindestens zwei Werkzeuge gebracht, die anschließend aufeinander zubewegt werden und den Posten Glas in einem zwischen den Formgebungsflächen verbleibenden Raum einschließen. Zur Verformung wird die nötige Kraft auf die Werkzeuge ausgeübt. Üblicherweise wird die Kraft aufrechterhalten, bis das Glas ausreichend abgekühlt ist, um ohne anschließende Verformung aus den Werkzeugen entnommen werden zu können.

Beim Pressen stehen üblicherweise die formgebenden Flächen in innigem Kontakt zum zu verformenden Glas. Dadurch werden auch feinste Strukturen auf den Formgebungswerkzeugen in der neu gebildeten Oberfläche des Glasteiles abgebildet.

Bei der Herstellung von Glasteilen für optische Zwecke wird jedoch gefordert, daß die Oberfläche frei von jeglichen Strukturen ist. Üblicherweise ist eine derartige Oberfläche auf einem Bauteil nur durch Schleifen und Polieren nach dem Pressen erzielbar. Damit sind in der Regel hohe Kosten verbunden.

Glasteile, die ohne Kontakt zu Formgebungswerkzeugen abkühlen, weisen dagegen eine sogenannte feuerpolierte Oberfläche ohne jegliche Beschädigungen auf. Da jedoch keine Formgebungsflächen das Glas während der Erstarrung formen, nimmt es von sich aus eine durch die Oberflächenspannung bestimmte Form an, die nahezu nie die gewünschte Form ist.

Es sind bereits Werkzeuge bekannt, in denen Glas durch einen Preßvorgang in eine gewünschte Form gebracht werden kann, ohne dabei die feuerpolierte Oberfläche, die sich bei freier Abkühlung einstellen würde, zu beschädigen. Diese Werkzeuge haben gemeinsam, daß die formgebenden Flächen aus einem durchlässigen Material bestehen und daß vor dem Einbringen des zu verformenden Glaspostens ein Fluidfilm auf den Oberflächen des Werkzeugs erzeugt wird, der einen Kontakt zwischen dem Glasposten und der Werkzeugoberfläche und damit eine Verletzung der Oberfläche des Glaspostens verhindert. Dieser Fluidfilm, und damit der kontaktfreie Zustand, wird in der Regel auch während des Pressens aufrechterhalten. So beschreibt die japanische Offenlegungsschrift JP 4-6114 ein Verfahren, bei dem die Preßstempel mit einer Flüssigkeit getränkt werden, welche während des Preßvorgangs verdampft und so einen Gasfilm bildet. Dieses Verfahren hat den Nachteil, daß die Verdampfung unkontrolliert abläuft und so ein gleichmäßiger Gasfilm nur schwer eingestellt werden kann.

Für die Prozeßsicherheit ist es günstiger, den Gasfilm direkt und regelbar einzubringen. Hierzu werden die formgebenden Flächen von der glasabgewandten Seite mit einem Gas oder einer Gasmischung durchströmt und bilden einen Gasfilm zwischen den Werkzeugen und dem Glasposten.

Eine Preßformung von Glas zwischen von einem Gasfilm bedeckten Formgebungsflächen ist in der japanischen Offenlegungsschrift JP 2000-302473 beschrieben.

Bei Preßwerkzeugen wird durch die aufgebrachte Preßkraft der zwischen Formgebungsfläche und Glasteil eingebracht Gasfilm bis auf sehr geringe Dicken von wenigen Mikrometern komprimiert. Um sicherzustellen, daß auch durch diesen dünnen Film keine Beschädigungen von der Form auf das Glasteil übertragen werden können, müssen die Formgebungsflächen eine sehr niedrige Rauhheit aufweisen, so daß keine spitzen Erhebungen über 5 µm auf den Flächen vorhanden sind. Außerdem sollte das Material der glaszugewandten Formgebungsfläche weder das Glas beeinträchtigen noch von diesem angegriffen werden. Darüber hinaus sollte es im Fall eines Kurzzeitkontaktes nicht zu einer Beschädigung des Formgebungswerkzeuges kommen.

Poröse Materialien weisen aufgrund ihrer Poren naturgemäß eine gewisse Rauhheit auf. Da diese Rauhheit etwa in der Größenordnung der Porengröße liegt, müssen für Preßwerkzeuge sehr feinporöse Materialien mit Porengrößen unter 20 um, vorzugsweise unter 5 µm, verwendet werden. Diese Materialien bedingen für das durchströmende Gas einen hohen Druckverlust.

Ist der Durchströmungswiderstand der porösen Form hoch, muß wegen des dadurch bedingten Druckabfalles mit relativ hohen Versorgungsgasdrücken gearbeitet werden, was mit relativ hohen Betriebskosten verbunden ist. Weiterhin besteht grundsätzlich die Gefahr eines Formenbruches, weil die auf die Form wirkende Druckbelastung relativ hoch wird. Andererseits ist bekannt, daß zur gleichmäßigen Ausbildung eines möglichst stabilen Gasfilms ein gewisser Mindest-Differenzdruck Voraussetzung ist, was am wirtschaftlichsten durch eine Formunterlage mit relativ geringen Werten für die Gaspermeabilität, jedoch mit möglichst gleichmäßiger Porenverteilung über die Oberfläche erreicht werden kann.

Der Erfindung liegt die Aufgabe zugrunde, eine Vorrichtung zum Preßformen eines schmelzflüssigen Postens aus Glas oder Glaskeramik oder einem sonstigen viskosen und formbaren Stoff zu schaffen und zu einem Körper bestimmter Gestalt umzuformen, insbesondere zu einem optischen Körper wie einer optischen Linse, und zwar unter Verwendung von Preßformwerkzeugen, deren dem zu formenden Material zugewandte Flächen aus offenporigem Material aufgebaut sind und die einen Druckgasanschluß haben. Eine solche Vorrichtung soll derart beschaffen sein, daß sich Preßlinge mit einwandfreien Oberflächen erzeugen lassen, daß der Durchströmwiderstand der Flächen aus offenporigem Material, und damit die Betriebskosten gering sind, und daß die Vorrichtung einfach und damit kostengünstig im Aufbau ist.

Diese Aufgabe wird durch die Merkmale von Anspruch 1 gelöst.

Der Grundgedanke besteht somit darin, die Poren jenes Materiales, das sich in unmittelbarer Nähe der formgebenden Flächen befindet, sehr klein zu machen, so daß die Oberflächenrauhigkeit gering ist, und sich damit ein Körper hoher Oberflächengüte herstellen läßt. Die Stärke der Schicht, die den formgebenden Flächen nahe ist, sollte auf die notwendige Mindestdicke beschränkt werden. Diese Schicht wird auf eine gröbere Unterschicht aufgebracht, die zur Erreichung einer gewünschten Bauteilsfestigkeit ausreichend dick bemessen sein kann, da in ihr kein wesentlicher Druckverlust für das durchströmende Gas auftritt. Bei Bedarf können mehr als zwei verschiedene Materialien bzw. Porositäten kombiniert werden, auch kann die unterste Schicht mit Kanälen und/oder Strukturen versehen werden.

Außer in der Porosität können sich die verschiedenen Schichten noch weitergehend unterscheiden. Die Schichten können aus unterschiedlichen Werkstoffen bestehen, so daß es möglich ist, eine dünne, feinporöse Schicht aus einem Material, welches das Glas nicht beeinträchtigt und selbst nicht vom Glas oder von Verdampfungsprodukten daraus angegriffen wird, wie Edelmetall, auf einem kostengünstigen Grundkörper aufzubringen. Hier sind nahezu beliebige Werkstoffpaarungen möglich, wie Metall auf Metall, Metall auf Keramik oder Keramik auf Metall. Auch Schichtsysteme mit mehr als zwei Schichten sind denkbar und insbesondere bei einer guten Kombination mit einer zur Oberfläche hin feiner werdenden Porosität mit einer Schicht mit guten Glaskontakteigenschaften zu bevorzugen.

In der Praxis gibt es mehrere Wege, die Erfindung zu verwirklichen. So kann das betreffende Formwerkzeug aus Schichten unterschiedlicher Stärken und Porengrößen zusammengefügt werden, da diejenige Schicht, die die formgebende Fläche aufweist, die geringste Stärke und die kleinsten Poren aufweist.

Das betreffende Preßwerkzeug kann jedoch aus einer porösen Unterlage gebildet sein, das relativ große offene Poren aufweist, sowie aus einer Schicht, die auf die Unterlage aufgebracht wird.

Um dies zu verwirklichen, lassen sich gemäß der Erfindung verschiedene Wege beschreiten. So kann ein Schichtmaterial verwendet werden, das selbst eine Porosität aufweist. Poröse Schichtmaterialien können somit auch in größerer Stärke auf die Tragfläche der Formunterlage aufgebracht werden, weil deren Durchströmbarkeit in aufgebrachtem Zustand stets sichergestellt ist. Dabei kann es sich auch um ein Material handeln, bei dem sich die Poren erst beim Aufbringen bilden.

Es kann aber auch eine Schicht aufgebracht werden, die sehr dünn ist und beispielsweise aus Edelmetall oder aus einer Edelmetall-Legierung besteht. Dadurch wird die Problematik des Haftens und Klebens des zu verformenden Materials an den Werkzeugen verringert oder ganz beseitigt. Die Edelmetallbeschichtung wird dabei durch ein geeignetes Verfahren so dünn aufgetragen, daß die Porenstruktur (Porosität und Porengrößenverteilung) des Formenwerkstoffes erhalten bleibt. Für den Formenwerkstoff günstige Porenstrukturen liegen bei 5 bis 20 Vol.-% offenes Porenvolumen bei d₅₀-Werten für den Porendurchmesser zwischen 2 und 100 µm.

In einer weiteren Ausgestaltung des erfindungsgemäßen Verfahrens wird eine asymmetrische Porenstruktur des Formenwerkstoffes erzeugt. Das bedeutet, die dem Glasposten zugewandte Seite des Formenwerkstoffes hat signifikant feinere (z. B. d₅₀-Wert um einen Faktor 2 kleiner) Porengrößen als die darunter liegende, stabilitätserhaltende und gröbere Porenstruktur. Der Porengrößenbereich auf der Glaskontaktseite liegt dabei je nach Anwendungsfall im Bereich zwischen 0,5 und 50 µ m (d₅₀-Wert). Durch diese Anordnung werden drei Vorteile erreicht:
1. Die relativ feine Porenstruktur der dem Glasposten zugewandten Seite verursacht auch bei gelegentlichem Glaskontakt wesentlich kleinere mechanische Oberflächenfehler.
2. Der feinporösen Schicht kommt keinerlei Stabilitätswirkung zu; diese wird durch die grobporöse Schicht übernommen. Wegen der geringen Schichtdicke der feinporösen Schicht wird jedoch der Durchströmungswiderstand der Form gegenüber einer durchgehend aus feinporösem Material bestehenden Form stark herabgesetzt, was sich in einem verringerten Druckabfall des durchströmenden Gases und damit einer geringeren Störanfälligkeit des Prozesses (z. B. durch Formenbruch) sowie in einer Senkung der Betriebskosten bemerkbar macht.
3. Die Gasverteilung durch eine feinporöse Schicht ist bei vergleichbarer Porosität homogener als bei einer gröberen Porenstruktur. Dies trägt zu einer besseren Oberflächengüte des so hergestellten Glasproduktes bei.

Prinzipiell können sich die erfindungsgemäßen asymmetrischen Formenwerkstoffe dadurch unterscheiden, daß die grobe und die feine Struktur entweder die gleiche (Keramik - Keramik oder Edelmetall - Edelmetall) oder unterschiedliche (vorzugsweise fein poröse Edelmetallschicht auf grob poröser Keramik oder grob porösem, unedlem Metall, wie z.b. Edelstahl) chemische Zusammensetzungen haben.

Die Aufbringung von porositätserhaltenden Edelmetallschichten auf das grob poröse Substrat kann durch die üblichen für diesen Zweck anwendbaren Verfahren, also beispielsweise durch Sputtern, Sprühen, Tauchen oder Abscheidung aus Lösungen oder Suspensionen erfolgen.

Die asymmetrischen Strukturen können durch ein hierfür üblicherweise eingesetztes Verfahren (z.B. durch Sprühen oder durch Zusammensintern von zwei vorgefertigten Formkörpern unterschiedlicher Porosität mit entsprechend angepaßter Geometrie) hergestellt werden. Wesentlich ist nur, daß die Dicke der feinporösen Schicht nicht mehr als 20 % der Gesamtdicke der asymmetrischen Struktur beträgt. Auf eine solche feinporöse Schicht kann - falls sie aus einer Keramik oder einem unedlen Metall besteht - zusätzlich eine porositätserhaltende Beschichtung aus Edelmetall zur Herabsetzung der Klebeneigung aufgebracht sein.

Es ist auch denkbar, bei jeglicher Art von Beschichtungsmaterial die Poren der Schicht nach deren Aufbringen auf die Tragfläche der Formunterlage erst zu erzeugen, beispielsweise durch eine Begasung vor Inbetriebnahme der Anlage, d.h. bevor ein Glasposten aufgebracht wird. Dabei tritt Gas aus den Poren der Formunterlage aus, erzeugt aufgrund der Energie der feinen Gasstrahlen entsprechende feine Bohrungen in der Schicht, die beim Aushärten der Schicht erhalten bleiben, so daß sich zwischen der Oberfläche der Schicht und dem Glasposten ein Gasbett bilden kann.

In jedem Falle muß sowohl das Material der Formunterlage als auch das Material der Schicht alle sonstigen Anforderungen an den Prozeß erfüllen. Diese Materialien müssen insbesondere hitzebeständig sein.

Somit ist es möglich, mit dem erfindungsgemäßen Verfahren und mit der erfindungsgemäßen Vorrichtung schmelzflüssige Glasposten einer kontaktfreien Formgebung zu unterwerfen. Damit lassen sich kontinuierlich und kostengünstig Glasteile mit feuerpolierter Oberfläche herstellen. Das Verfahren und die Vorrichtung sind insbesondere geeignet zur Herstellung optischer Linsen, aber auch flächiger Körper. Der unmittelbare Kontakt zwischen der Formunterlage und dem Glasposten wird zuverlässig verhindert, so daß die Glasoberfläche völlig fehlerfrei ist. Selbst ein gelegentlicher Kontakt zwischen Formunterlage und Glasposten, z. B. beim Befüllen der Formunterlage mit schmelzflüssigem Glas, hat dabei keine gravierenden Auswirkungen auf die Produktqualität und die Standzeit der Formunterlage.

## Patentansprüche

1. Vorrichtung zum Preßformen eines Postens aus schmelzflüssigem Material zu einem Körper bestimmter Gestalt, insbesondere eines Postens aus Glas oder Glaskeramik;
1.1 mit Preßwerkzeugen, die ein Formnest zum Aufnehmen des Postens miteinander bilden;
1.2 die Preßwerkzeuge bestehen wenigstens im Bereich der formgebenden Flächen aus offenporigem Material;
1.3 die Preßwerkzeuge sind an eine Druckgasquelle angeschlossen, um einen Gasstrom zu erzeugen, der an den formgebenden Flächen austritt;
1.4 im offenporigen Material der formgebenden Flächen sind die den formgebenden Flächen nahen Poren kleiner als die den formgebenden Flächen fernen Poren.

2. Vorrichtung nach Anspruch 1 mit den folgenden Merkmalen:
2.1 die formgebenden Flächen der Preßwerkzeuge sind aus Schichten aufgebaut, die aus offenporigem Material bestehen;
2.2 die Poren jener Schicht, die die formgebenden Flächen bilden, sind kleiner als die Poren der anderen Schichten.

3. Vorrichtung nach Anspruch 1 oder 2, **dadurch gekennzeichnet, daß** die die formgebenden Flächen bildenden Schichten durch Sputtern, Sprühen, Tauchen oder Abscheiden aus Lösungen oder Suspensionen auf eine Formunterlage aufgebracht sind.

4. Vorrichtung nach einem der Ansprüche 1 bis 3, **dadurch gekennzeichnet, daß** die einzelnen Schichten aus unterschiedlichen Materialien bestehen.

5. Vorrichtung nach einem der Ansprüche 1 bis 4, **dadurch gekennzeichnet, daß** die die formgebenden Flächen bildenden Schichten eine Dicke im Bereich von 0,5 bis 1 mm aufweisen.

6. Vorrichtung nach einem der Ansprüche 1 bis 5, **dadurch gekennzeichnet, daß** die an den formgebenden Flächen befindlichen Poren einen Durchmesser von 2 bis 100 µm aufweisen.

7. Vorrichtung nach einem der Ansprüche 1 bis 6, **dadurch gekennzeichnet, daß** die Materialien nahe der formgebenden Flächen ein offenes Porenvolumen von 5 bis 40 Vol.-% aufweisen.

8. Vorrichtung nach einem der Ansprüche 1 bis 7, **dadurch gekennzeichnet, daß** die die formgebenden Flächen bildenden Schichten aus einem Edelmetall der ersten oder achten Nebengruppe des periodischen Systems der Elemente oder aus beliebigen Legierungen dieser Elemente untereinander bestehen.
